# EUROPÄISCHE PATENTSCHRIFT

(11) **EP 2 065 517 B1**
(45) Veröffentlichungstag und Bekanntmachung des Hinweises auf die Patenterteilung: **15.06.2011**
(21) Anmeldenummer: 08169532.2
(22) Anmeldetag: 20.11.2008
(51) Int. Cl.: E02D 17/20, B09B 1/00, E02B 3/12

(54) **Dichtungsmatte, insbesondere für den Deichbau**
Sealing mat, especially for dike construction
Couche d'étanchéité, notamment pour la construction de digues

(30) Priorität: 27.11.2007 DE 102007057359
(43) Veröffentlichungstag der Anmeldung: 03.06.2009
(73) Patentinhaber: Huesker Synthetic GmbH, 48712 Gescher (DE)
(72) Erfinder: Pintz, Heiko, 48527 Nordhorn (DE); Lassnig, Herbert, 9346 Glödnitz (AT)
(74) Vertreter: Patentanwälte Freischem

(56) Entgegenhaltungen:
- EP-A- 1 496 162
- WO-A-02/29165
- DE-A1- 4 221 329
- US-A1- 2006 009 100

## Beschreibung

### Technisches Gebiet

Die Erfindung betrifft eine Dichtungsmatte mit einer Trägerbahn, einer Deckbahn und einer dazwischen angeordneten Schicht aus Bentonit oder einem anderen quellfähigen Material.

Die Erfindung betrifft ferner ein Verfahren zur Herstellung einer derartigen Dichtungsmatte sowie die Verwendung einer derartigen Dichtungsmatte.

### Stand der Technik

Derartige Bentonit-Dichtungsmatten sind beispielsweise bekannt aus den Druckschriften EP 1 009 885 B1 und DE 38 02 085. Diese Matten weisen eine Schicht aus einem stark quellfähigen Material auf, insbesondere aus Bentonit, einem quellfähigen Ton mit einem großen Anteil an Montmorillonit. Die Bentonit-Schicht quillt bei der Aufnahme von Wasser auf und wird dabei wasserundurchlässig. Weitere Bentonit-Dichtungsmatten sind aus den Druckschriften EP1 496 162 A1, WO 02/29165 A1 und US 2006/009100 A1 bekannt.

Insbesondere im Deichbau haben sich derartige Dichtungsmatten in der Praxis bewährt, um eine weitgehend wasserdichte Trennschicht zwischen der über der Dichtungsmatte liegenden Erdschicht und dem unter der Dichtungsmatte liegenden Erdreich zu schaffen. Allerdings besteht die Gefahr, dass Nagetiere wie Ratten, Mäuse, Biber u.ä. sich in das Bauwerk mit der Dichtungsmatte eingraben und dabei die dichtende Tonschicht oder sogar die Deichstruktur selbst zerstören.

### Darstellung der Erfindung

Aufgabe der Erfindung ist es, die Lebensdauer der Dichtungsmatte und die Standfestigkeit damit erzeugter Bauwerke zu erhöhen.

Diese Aufgabe wird erfindungsgemäß in Bezug auf die Dichtungsmatte durch die Gesamtheit der Merkmale des Anspruchs 1 und in Bezug auf das Verfahren zur Herstellung einer Dichtungsmatte durch die Gesamtheit der Merkmale des Anspruchs 9 gelöst. mm aufweist. Derartige Metallstrukturen können durch die Zähne und Krallen der Nager nicht zerstört werden.

Ferner kann ein Kunststoffgitter oder eine Kunststofffolie als Schutzschicht eingezogen werden, welche jeweils einen Zusatz aufweist, der Nagetiere vertreibt oder tötet. Durch einen spezifischen Giftstoff, der nur für Nager gefährlich ist, lässt sich gezielt ein Angriff gegen die Dichtungsmatte vermeiden. Derartige Giftstoffe, z.B. Rattengifte (Rodentizide wie Cumarine, Warfarin, Bromadiolon, Difenacoum, Brodifacoum) sind aus dem Stand der Technik weithin bekannt und werden hier nicht weiter beschrieben. Bei der Verwendung von Rodentiziden ist darauf zu achten, dass nicht unbeabsichtigt andere Lebewesen durch diese Gifte gefährdet werden. Ferner können auch Stoffe wie Calciumcarbid zugesetzt werden, welche Nagetiere vertreiben. Auch ist aber darauf zu achten, dass eine unerwünschte Kontamination von Gewässern und eine Gefährdung des Fischbestandes ausgeschlossen ist.

Eine Schutzschicht aus einem Metallgitter, z.B. aus Stahldrähten, hat den Vorteil, dass die Kontamination des benachbarten Erdreichs oder benachbarter Gewässer ausgeschlossen ist. Bei einer Schutzschicht aus Stahldrähten haben die Drähte vorzugsweise eine Dicke von mindestens 0,5 mm. Das aus den Drähten gebildete Gitter kann in der Praxis eine Maschenöffnung im Bereich von 3-12 mm, vorzugsweise 5-10 mm aufweist.

Wenn die Schutzschicht an der dem Bentonit zugewandten Seite der Deckbahn oder der Trägerbahn angeordnet ist, besteht die Gefahr, dass zumindest die äußere Deckbahn oder Trägerbahn durch Nager zerstört wird, bevor diese auf die Schutzschicht treffen. Deswegen ist in der Praxis vorzugsweise die Schutzschicht an der Außenseite der Deckbahn oder der Trägerbahn angeordnet.

Die Deckbahn oder die Trägerbahn oder auch beide Bahnen können mit einem Haftmittel beschichtet sein. Das Haftmittel, vorzugsweise Bitumen, kann dazu dienen, die Schutzschicht an der Deckbahn bzw. der Trägerbahn festzulegen. Mit anderen Worten wird auf mindestens einer Außenseite der Dichtungsmatte eine bituminöse Haftmittelschicht aufgebracht, in welche beispielsweise ein Stahlgitter als Schutzschicht eingebettet ist. Auf diese Weise lässt sich kostengünstig eine vorteilhafte Dichtungsmatte herstellen. Die Bitumenschicht verstärkt die Dichtungswirkung des Bentonits.

In der Regel wird die Schutzschicht auf der Deckschicht der Dichtungsmatte angebracht. Nur wenn ein Nagetierbefall von unten her, z.B. aus der Kanalisation, zu erwarten ist, muss alternativ oder zusätzlich die Trägerschicht mit einer Schutzschicht versehen werden.

Ähnlich wie bei dem Stand der Technik kann die Deckbahn und die Trägerbahn von einem textilen Gebilde, insbesondere einem Vlies oder einem Gewebe, gebildet werden. Deckbahn und Trägerbahn können miteinander durch vernadeln verbunden werden. Deckbahn und Trägerbahn können aber auch miteinander verschweißt oder auf andere geeignete Weise miteinander verbunden werden. Aus dem Stand der Technik ist es ferner bekannt, Deckbahn und Trägerbahn miteinander zu vernähen. Beim Vernähen von Deckbahn und Trägerbahn kann zwischen beiden Bahnen gemäß der Patentschrift EP 0 536 475 B1 ein sehr leichter, watteartiger Vliesstoff, ein sogenanntes Aerovlies angeordnet sein, in dem das Bentonitpulver eingelagert ist.

Wenn die Deckbahn und die Trägerbahn durch Nähte miteinander verbunden sein, welche die Bentonitschicht durchragen, kann in der Praxis zusätzlich die Schutzschicht mittels dieser Nähte befestigt werden. In diesem Fall muss eine Schutzschicht gewählt werden, welche durch Nähnadeln durchdrungen werden kann. Wenn beispielsweise ein Stahlgitter gewählt wird, müssen die Nähnadeln mit den Gitteröffnungen synchronisiert werden. Alternativ können bewegliche Nähnadeln eingesetzt werden, die ausweichen können, wenn sie beim Vernähen auf einen Draht des Gitters treffen.

Wenn die Schutzschicht nicht mit der Deckbahn oder der Trägerbahn vernäht ist, sondern ausschließlich durch das Haftmittel festgeklebt ist, wird im eingebauten Zustand durch den Erddruck ein ausreichender Halt zwischen der Schutzschicht und der Deckbahn bzw. der Trägerbahn erreicht.

### Kurze Beschreibung der Zeichnungen

Ausführungsformen der Erfindung werden nachfolgend unter Bezugnahme auf die beigefügten Zeichnungen beschrieben.

Fig. 1 zeigt eine Draufsicht auf die verschiedenen Schichten der erfindungsgemäßen Dichtungsmatte.

Fig. 2 zeigt eine geschnittene Seitenansicht der Dichtungsmatte aus Fig. 1.

Fig. 3 zeigt eine geschnittene Seitenansicht einer alternativen Ausführungsform einer erfindungsgemäßen Dichtungsmatte.

### Ausführungsform(en) der Erfindung

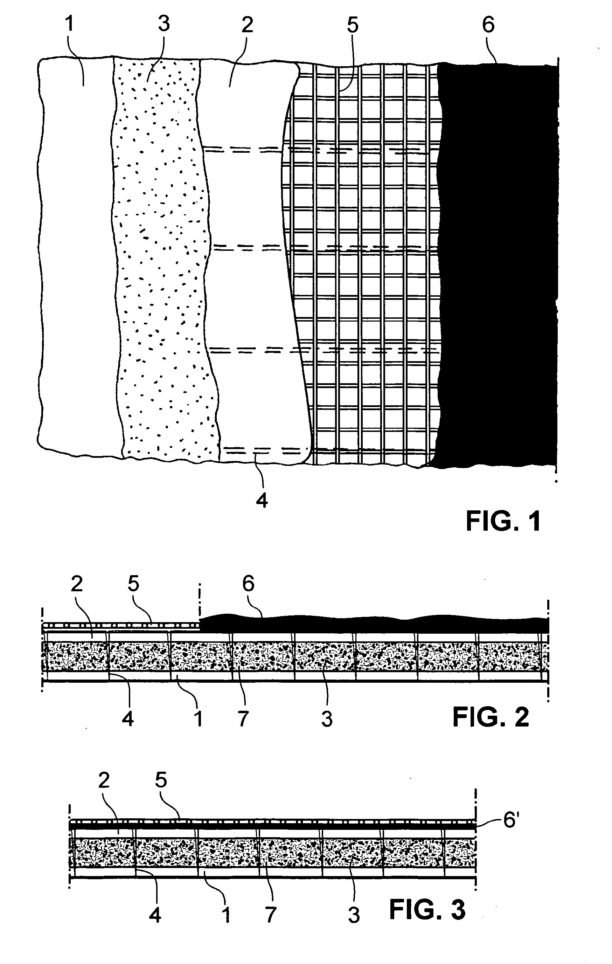

Die in der Fig. 1 dargestellte Draufsicht der Dichtungsmatte zeigt von links nach rechts die von unten nach oben aufeinanderfolgenden Schichten der Dichtungsmatte. Zunächst ist die unterste Trägerbahn 1 zu erkennen. Darauf folgt die Bentonitschicht 3, welche mit der Deckbahn 2 abgedeckt ist.

Deckbahn 2 und Trägerbahn 1 sind miteinander verbunden.

Deckbahn 2 und Trägerbahn 1 können beispielsweise aus Faservliesen besteht. In diesem Fall kann die Verbindung von Deckbahn und Trägerbahn durch Vernadeln erfolgen. Beim Vernadeln werden Fasern der Deckbahn 2 und der Trägerbahn 1 durch die Bentonitschicht 3 gezogen und in der jeweils anderen Bahn 1 bzw. 2 verankert.

Bei einer anderen, in den beigefügten Zeichnungen dargestellten Ausführungsform sind Deckbahn 2 und Trägerbahn 1 miteinander über Nähte 4 vernäht. Die Nähte 4 verlaufen beispielsweise im Abstand von 2,5cm parallel zueinander. Um eine Fixierung der Bentonitschicht 3 zu erreichen, ist diese, wie in Fig. 2 erkennbar, in ein sogenanntes Aerovlies 7 eingelagert. Ein Aerovlies 7 ist ein sehr leichtes, watteartiges Faservlies mit sehr geringem Gewicht und sehr großem Porenanteil. Die Bentonitschicht 3 kann entweder in das Aerovlies 7 eingerüttelt werden oder bei der Verarbeitung der Textilbahnen 1,2 in das Aerovlies 7 eindringen.

Wenn Deckbahn 2 und Trägerbahn 1 miteinander vernäht sind, können sie auch aus einem anderen Material als Faservlies bestehen. Insbesondere können beliebige Textilbahnen zur Bildung der Deckbahn 2 und Trägerbahn 1 verwendet werden.

Auf der Deckbahn 2 ist als Schutzschicht gegen Nagetiere ein Stahlgitter 5 angeordnet. Das Stahlgitter 5 hat eine Maschenweite (Abstand zwischen zwei zueinander parallelen Stahlfäden), die vorzugsweise zwischen 5 und 10 mm liegt.

Das Stahlgitter 5 besteht aus einem Stahldraht, der einen Durchmesser von vorzugsweise 0,3 mm oder mehr aufweist.

Auf der Deckschicht 2 ist zusätzlich eine Haftmittelschicht 6 vorgesehen. Vorzugsweise besteht das Haftmittel 6 aus Bitumen.

Wie in Fig. 2 dargestellt, kann die Haftmittelschicht 6 die Schutzschicht 5 aus Stahlgitter vollständig umschließen. Alternativ kann die Haftmittelschicht 6 lediglich dünnschichtig zwischen der Deckschicht 2 und der Schutzschicht 5 angeordnet sein, so dass die Schutzschicht 5 mit der Deckschicht 2 durch die Haftmittelschicht 6' verklebt ist. Eine derartige alternative Ausführungsform ist in Fig. 3 gezeigt.

### Bezugszeichenliste:

- 1: Trägerbahn
- 2: Deckbahn
- 3: Bentonitschicht
- 4: Naht
- 5: Stahlgitter, Schutzschicht
- 6,6': Bitumenschicht, Haftmittel
- 7: Aerovlies

## Patentansprüche

1. Dichtungsmatte mit einer Trägerbahn (1), einer Deckbahn (2) und einer dazwischen angeordneten Schicht (3) aus Bentonit oder einem anderen quellfähigen Material, **dadurch gekennzeichnet, dass** auf der Deckbahn (2) und/oder der Trägerbahn (1) eine gegen Nagetiere schützende Schutzschicht (5) angeordnet ist, wobei die gegen Nagetiere schützende Schutzschicht
- ein Metallgitter (5) ist oder
- eine Metallfolie mit einer Dicke von mehr als 0,3 mm ist oder
- ein Kunststoffgitter oder eine Kunststofffolie ist, jeweils mit Nagetiere vertreibenden oder tötenden Zusätzen.

2. Dichtungsmatte nach Anspruch 1, **dadurch gekennzeichnet, dass** das gegen Nagetiere schützende Metallgitter (5) mindestens eines der folgenden Merkmale aufweist:
- es besteht aus Stahl;
- seine Stahldrähte haben eine Dicke von mindestens 0,5 mm.

3. Dichtungsmatte nach Anspruch 1 oder 2, **dadurch gekennzeichnet, dass** ein die Schutzschicht bildendes Gitter (5) eine Maschenöffnung im Bereich von 3 bis 12 mm hat.

4. Dichtungsmatte nach einem der vorangehenden Ansprüche, **dadurch gekennzeichnet, dass** die Deckbahn (2) und/oder die Trägerbahn (1) mit einem Haftmittel (6,6') beschichtet ist.

5. Dichtungsmatte nach Anspruch 4, **dadurch gekennzeichnet, dass** mit dem Haftmittel (6,6') die Schutzschicht (5) an der Deckbahn (2) und/oder Trägerbahn (1) festgelegt ist.

6. Dichtungsmatte nach Anspruch 4 oder 5, **dadurch gekennzeichnet, dass** das Haftmittel (6,6') Bitumen oder ein polymeres Material ist.

7. Dichtungsmatte nach einem der vorangehenden Ansprüche, **dadurch gekennzeichnet, dass** die Deckbahn (2) und die Trägerbahn (1) durch Nähte (4) miteinander verbunden sind.

8. Dichtungsmatte nach einem der vorangehenden Ansprüche, **dadurch gekennzeichnet, dass** die Schutzschicht (5) mittels Nähten an der Deckbahn (2) und/oder der Trägerbahn (1) befestigt ist.

9. Verfahren zur Herstellung einer Dichtungsmatte, bei dem zwischen einer Trägerbahn (1) und einer Deckbahn (2) eine Schicht (3) aus Bentonit oder einem anderen stark quellfähigen Ton angeordnet wird und die zwei Bahnen (1,2) miteinander verbunden werden, **dadurch gekennzeichnet, dass** auf der Deckbahn (2) und/oder der Trägerbahn (1) eine gegen Nagetiere schützende Schutzschicht (5) angeordnet wird, wobei als gegen Nagetiere schützende Schutzschicht
- ein Metallgitter (5) verwendet wird oder
- eine Metallfolie mit einer Dicke von mehr als 0,3 mm verwendet wird oder
- ein Kunststoffgitter oder eine Kunststofffolie verwendet wird, jeweils mit Nagetiere vertreibenden oder tötenden Zusätzen.

10. Verfahren nach Anspruch 9, **dadurch gekennzeichnet, dass** die Deckbahn (2) und/oder die Trägerbahn (1) mit einem Haftmittel (6,6') beschichtet wird, wobei vorzugsweise mit dem Haftmittel (6,6') die Schutzschicht (5) an der Deckbahn (2) und/oder Trägerbahn (1) festgelegt wird.

11. Verfahren nach Anspruch 10, **dadurch gekennzeichnet, dass** als Haftmittel (6,6') Bitumen verwendet wird.

12. Verfahren nach einem der vorangehenden Ansprüche 9 bis 11, **dadurch gekennzeichnet, dass** die Deckbahn (2) und die Trägerbahn (1) durch Nähte (4) miteinander verbunden werden.

13. Verfahren nach einem der Ansprüche 9 bis 12, **dadurch gekennzeichnet, dass** die Schutzschicht (5) mittels Nähten (4) an der Deckbahn (2) und/oder der Trägerbahn (1) befestigt wird.

14. Verwendung einer Dichtungsmatte nach einem der Ansprüche 1 bis 8 zur Abdichtung im Wasserbau, insbesondere zur Abdichtung von Deichen.

## Claims

1. Sealing mat with a carrier web (1), a cover web (2) and an intermediate layer (3) of bentonite or another swellable material, **characterised in that** arranged on the cover web (2) and/or carrier web (1) is a protective layer (5) providing protection against rodents, wherein the protective layer providing protection against rodents is
- a metal grid (5) or
- a metal film with a thickness of more than 0.3 mm, or
- a plastic grid or a plastic film each with additives which repel or kill rodents.

2. Sealing mat according to claim 1, **characterised in that** the metal grid (5) providing protection against rodents has at least one of the following features:
- it consists of steel
- its steel wires have a thickness of at least 0.5 mm.

3. Sealing mat according to claim 1 or 2, **characterised in that** a grid (5) forming the protective layer has a mesh size in the range of 3 to 12 mm.

4. Sealing mat according to any of the preceding claims, **characterised in that** the cover web (2) and/or carrier web (1) is coated with an adhesive (6, 6')

5. Sealing mat according to claim 4, **characterised in that** the adhesive (6, 6') fixes the protective layer (5) to the cover web (2) and/or carrier web (1).

6. Sealing mat according to claim 4 or 5, **characterised in that** the adhesive (6, 6') is bitumen or a polymer material.

7. Sealing mat according to any of the preceding claims, **characterised in that** the cover web (2) and the carrier web (1) are connected together by seams (4).

8. Sealing mat according to any of the preceding claims, **characterised in that** the protective layer (5) is attached to the cover web (2) and/or carrier web (1) by seams.

9. Method for production of a sealing mat in which between a carrier web (1) and a cover web (2) is arranged a layer (3) of bentonite or another highly swellable clay and the two webs (1, 2) are connected together, **characterised in that** on the cover web (2) and/or the carrier web (1) is arranged a protective layer (5) giving protection against rodents, wherein as a protective layer giving protection against rodents is used
- a metal grid (5) or
- a metal film with the thickness of more than 0.3 mm, or
- a plastic grid or a plastic film, in each case with additives which repel or kill rodents.

10. Method according to claim 9, **characterised in that** the cover web (2) and/or the carrier web (1) is coated with an adhesive (6, 6'), wherein preferably the adhesive (6, 6') fixes the protective layer (5) to the cover web (2) and/or carrier web (1).

11. Method according to claim 10, **characterised in that** bitumen is used as an adhesive (6, 6').

12. Method according to any of the preceding claims 9 to 11, **characterised in that** the cover web (2) and the carrier web (1) are connected together by seams (4).

13. Method according to any of claims 9 to 12, **characterised in that** the protective layer (5) is fixed to the cover web (2) and/or carrier web (1) by seams (4).

14. Use of a sealing mat according to any of claims 1 to 8 for sealing in waterway construction, in particular to seal dykes.

## Revendications

1. Tapis d'étanchéité avec une feuille de support (1), une feuille de couverture (2) et une couche (3), disposée entre celles-ci, de bentonite ou d'un autre matériau susceptible de gonfler, **caractérisé en ce qu'**une couche de protection (5) protégeant contre les rongeurs est disposée sur la feuille de couverture (2) et/ou sur la feuille de support (1), la couche de protection protégeant contre les rongeurs étant
- une grille métallique (5) ou
- une feuille de métal ayant une épaisseur supérieure à 0,3 mm ou
- une grille en matière plastique ou une feuille en matière plastique, respectivement avec des additifs repoussant ou tuant les rongeurs.

2. Tapis d'étanchéité selon la revendication 1, **caractérisé en ce que** la grille métallique (5) protégeant contre les rongeurs présente au moins une des caractéristiques suivantes :
- elle est constituée d'acier ;
- ses fils d'acier ont une épaisseur d'au moins 0,5 mm.

3. Tapis d'étanchéité selon la revendication 1 ou 2, **caractérisé en ce qu'**une grille (5) formant la couche de protection a un vide de maille dans la plage de 3 à 12 mm.

4. Tapis d'étanchéité selon l'une quelconque des revendications précédentes, **caractérisé en ce que** la feuille de couverture (2) et/ou la feuille de support (1) est revêtue d'un adhésif (6, 6').

5. Tapis d'étanchéité selon la revendication 4, **caractérisé en ce que** la couche de protection (5) est fixée sur la feuille de couverture (2) et/ou sur la feuille de support (1) avec l'adhésif (6, 6').

6. Tapis d'étanchéité selon la revendication 4 ou 5, **caractérisé en ce que** l'adhésif (6, 6') est du bitume ou un matériau polymère.

7. Tapis d'étanchéité selon l'une quelconque des revendications précédentes, **caractérisé en ce que** la feuille de couverture (2) et la feuille de support (1) sont liées ensemble par des coutures (4).

8. Tapis d'étanchéité selon l'une quelconque des revendications précédentes, **caractérisé en ce que** la couche de protection (5) est fixée sur la feuille de couverture (2) et/ou sur la feuille de support (1) au moyen de coutures.

9. Procédé de fabrication d'un tapis d'étanchéité, dans lequel une couche (3) de bentonite ou d'une autre argile capable de gonfler fortement est disposée entre une feuille de support (1) et une feuille de couverture (2) et les deux feuilles (1, 2) sont reliées ensemble, **caractérisé en ce qu'**une couche de protection (5) protégeant contre les rongeurs est disposée sur la feuille de couverture (2) et/ou la feuille de support (1),
- une grille métallique (5) ou
- une feuille de métal ayant une épaisseur supérieure à 0,3 mm ou
- une grille en matière plastique ou une feuille de matière plastique, respectivement avec des additifs repoussant ou tuant les rongeurs
étant utilisé en tant que couche de protection protégeant contre les rongeurs.

10. Procédé selon la revendication 9, **caractérisé en ce que** la feuille de couverture (2) et/ou la feuille de support (1) est revêtue d'un adhésif (6, 6'), la couche de protection (5) étant fixée sur la feuille de couverture (2) et/ou la feuille de support (1) de préférence avec l'adhésif (6, 6').

11. Procédé selon la revendication 10, **caractérisé en ce que** du bitume est utilisé en tant qu'adhésif (6, 6').

12. Procédé selon l'une quelconque des revendications 9 à 11, **caractérisé en ce que** la feuille de couverture (2) et la feuille de support (1) sont reliées ensemble par des coutures (4).

13. Procédé selon l'une quelconque des revendications 9 à 12, **caractérisé en ce que** la couche de protection (5) est fixée sur la feuille de couverture (2) et/ou la feuille de support (1) au moyen de coutures (4).

14. Utilisation d'un tapis d'étanchéité selon l'une quelconque des revendications 1 à 8 en vue de l'étanchéification d'ouvrages hydrauliques, en particulier en vue de l'étanchéification de digues.
